# FASCICULE DE BREVET EUROPEEN

(11) **EP 2 380 474 B1**
(45) Date de publication et mention de la délivrance du brevet: **05.03.2014**
(21) Numéro de dépôt: 11305452.2
(22) Date de dépôt: 15.04.2011
(51) Int. Cl.: A47J 43/07

(54) **Appareil de préparation culinaire comportant un dispositif de sécurité à double détection**
Küchengerät mit doppelt detektierender Sicherheitsvorrichtung
Kitchenapparatus with security-device having a double detection

(30) Priorité: 20.04.2010 FR 1052982
(43) Date de publication de la demande: 26.10.2011
(73) Titulaire: SEB SA, 69130 Ecully (FR)
(72) Inventeur: Cypres, Régis, 65100, Lourdes (FR); Pedrico, Pascal, 65290, Louey (FR)
(74) Mandataire: Cémeli, Eric Philippe Laurent

(56) Documents cités:
- WO-A1-00/30515

## Description

La présente invention concerne le domaine technique des appareils de préparation culinaire comportant un récipient de travail, un outil de travail rotatif agencé dans le récipient de travail, un boîtier moteur disposé au dessus du récipient de travail et une coupelle agencée entre le récipient de travail et le boîtier moteur.

La présente invention concerne plus particulièrement les appareils du type précité comportant un dispositif de sécurité consistant à détecter la présence simultanée du récipient de travail et de la coupelle pour autoriser le fonctionnement de l'appareil.

Il est connu du document WO 00/30515 un appareil du type précité présentant un dispositif de sécurité comportant une pièce mobile montée basculante et portant un interrupteur. Le basculement de la pièce mobile repoussée par le récipient de travail autorise l'actionnement de l'interrupteur par la coupelle. Un inconvénient de la réalisation précitée réside dans le câblage de l'interrupteur monté mobile.

Il est connu du document WO 02/076273 un appareil du type précité présentant un dispositif de sécurité comportant une pièce mobile comprenant un premier organe de détection susceptible d'être repoussé par le récipient de travail et un deuxième organe de détection susceptible d'être repoussé par la coupelle. Le soulèvement de la pièce mobile déplace une tige de sécurité fermant un interrupteur monté sur le moteur électrique. Cette construction présente l'inconvénient de nécessiter un moteur électrique particulier.

L'objet de la présente invention est de proposer un appareil électroménager du type précité, dans lequel la construction du dispositif de sécurité détectant la présence du récipient de travail et de la coupelle est simplifiée.

Cet objet est atteint avec un appareil électroménager de préparation culinaire, comportant un boîtier supérieur logeant un moteur associé à un dispositif de commande et à un dispositif de sécurité, un récipient de travail dans lequel est disposé un outil de travail rotatif entraîné par le moteur, une coupelle disposée entre le boîtier supérieur et le récipient de travail, le dispositif de sécurité comportant un élément de détection prévu pour actionner un interrupteur de sécurité autorisant le fonctionnement du moteur lorsque la coupelle est en place entre le boîtier supérieur et le récipient de travail, l'élément de détection comprenant un premier organe de détection susceptible d'être repoussé par le récipient de travail et un deuxième organe de détection susceptible d'être repoussé par la coupelle, du fait que l'interrupteur de sécurité est monté sur une plaquette électronique appartenant au dispositif de commande. Cette construction permet de simplifier le câblage électrique de l'appareil. Cette construction permet également de rassembler les fonctions de commande et de sécurité sur un même support.

Selon une forme de réalisation avantageuse, le boîtier supérieur présente un organe de commande prévu pour actionner un interrupteur de commande monté sur la plaquette électronique. En alternative, l'appareil peut être dépourvu d'interrupteur de commande, le dispositif de sécurité comportant des moyens de rappel élastiques aptes à supporter le boîtier supérieur en évitant l'actionnement de l'interrupteur de sécurité. Pour faire fonctionner l'appareil, l'utilisateur exerce alors une pression sur la face supérieure du boîtier supérieur.

Avantageusement alors, l'interrupteur de sécurité et l'interrupteur de commande sont montés sur deux faces opposées de la plaquette électronique. Cette disposition permet de simplifier la construction de l'appareil.

Avantageusement encore, le boîtier supérieur présente un autre organe de commande prévu pour actionner un autre interrupteur de commande monté sur la plaquette électronique. Cette disposition permet de proposer un appareil présentant deux configurations de fonctionnement, l'interrupteur de commande permettant par exemple de faire fonctionner l'appareil à pleine puissance, alors que l'autre interrupteur de commande est associé à une portion de circuit électrique permettant de réduire la puissance de l'appareil.

Avantageusement alors, l'autre interrupteur de commande est agencé dans une branche de circuit électrique comportant une diode. Cette disposition permet d'éviter un réducteur complexe. Un appareil bi vitesse de construction économique peut ainsi être obtenu.

Avantageusement encore, l'élément de détection comporte un corps central présentant une zone de commande prévue pour actionner l'interrupteur de sécurité, le premier organe de détection étant formé sur un premier bras articulé sur le corps central, le deuxième organe de détection étant formé sur un deuxième bras articulé sur le corps central. En alternative, cet élément de détection n'est pas nécessairement utilisé avec un interrupteur de sécurité monté sur une plaquette électronique agencée dans le boîtier supérieur.

Avantageusement alors, pour assurer un bon guidage du premier bras et du deuxième bras, le premier bras est monté coulissant dans une première ouverture inférieure du boîtier supérieur et le deuxième bras est monté coulissant dans une deuxième ouverture inférieure du boîtier supérieur.

Selon une forme de réalisation avantageuse, le premier bras et le deuxième bras de l'élément de détection sont formés en une seule pièce. Cette pièce forme ainsi au moins une partie du corps reliant le premier bras et le deuxième bras.

Avantageusement encore, l'élément de détection est maintenu dans le boîtier supérieur par des moyens de rappel élastiques. Cette disposition permet de simplifier et de sécuriser la construction de l'appareil.

Avantageusement encore, l'interrupteur de sécurité est formé par une lamelle élastique susceptible de venir au contact d'un plot lorsque ladite lamelle élastique est repoussée par l'élément de détection. Avantageusement encore, cette construction peut être envisagée pour l'interrupteur de commande, voire pour l'autre interrupteur de commande. En alternative, l'interrupteur de sécurité peut être formé par un composant monté sur ladite plaquette électronique. Cette construction peut également être envisagée pour l'interrupteur de commande, voire pour l'autre interrupteur de commande.

Avantageusement alors, la zone de commande repousse la lamelle élastique lorsque le premier organe de détection est repoussé par le récipient de travail et que le deuxième organe de détection est repoussé par la coupelle. Un appareil présentant une contruction très simple peut ainsi être obtenu.

L'invention sera mieux comprise à l'étude d'un exemple de réalisation, pris à titre nullement limitatif, illustré dans les figures annexées, dans lesquelles :
- la figure 1 est une vue en perspective et en éclaté d'un appareil électroménager de préparation culinaire comportant un dispositif de sécurité selon l'invention,
- la figure 2 est une vue en perspective d'une partie du boîtier supérieur montrant le dispositif de commande,
- la figure 3 est une vue en perspective de la plaquette électronique logée dans le boîtier supérieur, ainsi que de l'élément de détection du dispositif de sécurité,
- la figure 4 est une vue en perspective de l'élément de détection,
- la figure 5 est une vue en perspective de la face supérieure d'un capot inférieur du boîtier supérieur, montrant le logement de l'élément de détection,
- la figure 6 est une vue en perspective de la face inférieure d'un capot inférieur du boîtier supérieur, montrant le premier organe de détection et le deuxième organe de détection appartenant à l'élément de détection,
- la figure 7 illustre l'élément de détection monté dans le logement ménagé sur le capot inférieur du boîtier supérieur,
- la figure 8 illustre le schéma électrique de l'appareil,
- la figure 9 est une vue en coupe du boîtier supérieur, en l'absence du récipient de travail et de la coupelle, l'élément de détection étant représenté de manière schématique,
- la figure 10 est une vue en coupe du boîtier supérieur, en présence de la coupelle et en l'absence du récipient de travail, l'élément de détection étant représenté de manière schématique,
- la figure 11 est une vue en coupe du boîtier supérieur, en présence du récipient de travail et en l'absence de la coupelle, l'élément de détection étant représenté de manière schématique,
- la figure 12 est une vue en coupe du boîtier supérieur, en présence du récipient de travail et de la coupelle, l'élément de détection étant représenté de manière schématique.

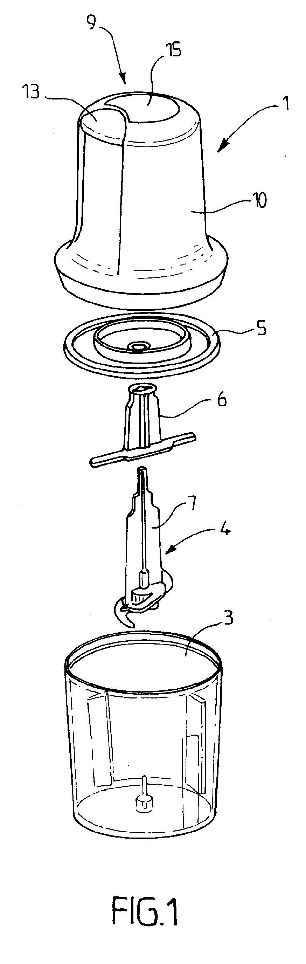

L'appareil électroménager de préparation culinaire illustré sur les figures 1 à 12 comporte un boîtier supérieur 1 logeant un moteur 2, un récipient de travail 3 dans lequel est disposé un outil de travail rotatif 4 entraîné par le moteur, et une coupelle 5 disposée entre le boîtier supérieur 1 et le récipient de travail 3. Un outil de travail rotatif complémentaire 6 peut être monté sur un moyeu 7 de l'outil de travail rotatif 4. Le moteur 2 est associé à un dispositif de commande 9 et à un dispositif de sécurité 20.

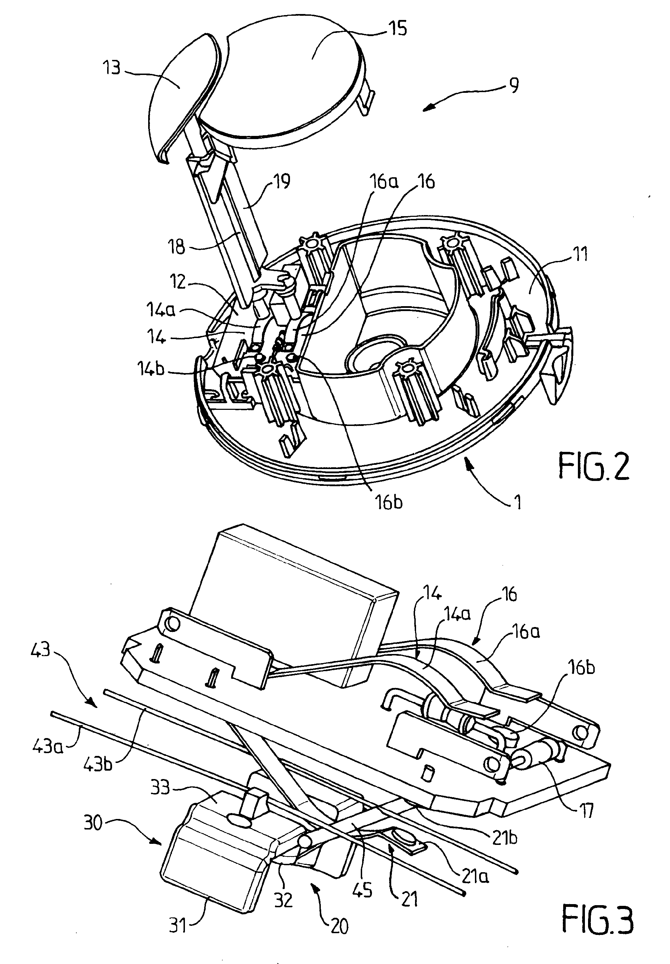

Le boîtier supérieur 1 comporte un capot supérieur 10, visible sur la figure 1, assemblé sur un capot inférieur 11, visible sur la figure 2. Le dispositif de commande 9 comporte une plaquette électronique 12 agencée dans le boîtier supérieur 1. La plaquette électronique 12 est par exemple formée par un circuit imprimé. Le moteur 2 est relié électriquement à la plaquette électronique 12.

Le boîtier supérieur 1 présente un organe de commande 13 prévu pour actionner un interrupteur de commande 14 monté sur la plaquette électronique 12. Le boîtier supérieur 1 présente un autre organe de commande 15 prévu pour actionner un autre interrupteur de commande 16 monté sur la plaquette électronique 12. L'interrupteur de commande 14 et l'autre interrupteur de commande 16 appartiennent au dispositif de commande 9.

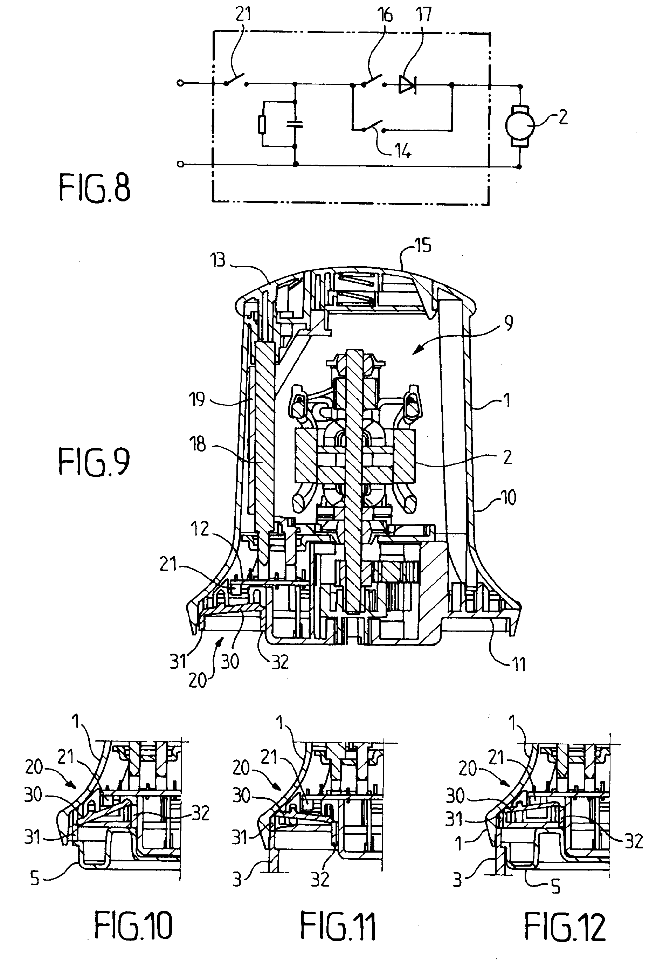

Tel que visible sur les figures 3 et 8, l'interrupteur de commande 14 et l'autre interrupteur de commande 16 sont montés en parallèle, l'autre interrupteur de commande 16 étant monté en série avec une diode 17. L'organe de commande 13 permet ainsi de faire fonctionner l'appareil à vitesse rapide, alors que l'autre organe de commande 15 agencé dans une branche de circuit électrique comportant la diode 17 permet de faire fonctionner l'appareil à vitesse lente.

Tel que visible sur les figures 2 et 9, l'organe de commande 13 est monté sur un élément de commande 18 prévu pour actionner l'interrupteur de commande 14. L'autre organe de commande 15 est monté sur un autre élément de commande 19 prévu pour actionner l'autre interrupteur de commande 16. Plus particulièrement, l'élément de commande 18 est formé par une tige et l'autre élément de commande 19 est formé par une glissière montée coulissante autour de ladite tige.

Tel que visible sur les figures 3 à 7 et 9 à 12, un dispositif de sécurité 20 agencé dans le boîtier supérieur 1 comporte un élément de détection 30 prévu pour actionner un interrupteur de sécurité 21 autorisant le fonctionnement du moteur 2 lorsque la coupelle 5 est en place entre le boîtier supérieur 1 et le récipient de travail 3. L'interrupteur de sécurité 21 est monté sur la plaquette électronique 12 appartenant au dispositif de commande 9.

Tel que mieux visible sur les figures 3, 4, 6 et 9 à 12, l'élément de détection 30 comprend un premier organe de détection 31 susceptible d'être repoussé par le récipient de travail 3 et un deuxième organe de détection 32 susceptible d'être repoussé par la coupelle 5, lorsque la coupelle 5 est en place entre le boîtier supérieur 1 et le récipient de travail 3.

Plus particulièrement, l'interrupteur de sécurité 21 et l'interrupteur de commande 14 sont montés sur deux faces opposées de la plaquette électronique 12. L'interrupteur de sécurité 21 est monté sur la face inférieure de la plaquette électronique 12. L'interrupteur de commande 14 et l'autre interrupteur de commande 16 sont montés sur la face supérieure de la plaquette électronique 12.

L'interrupteur de sécurité 21 est formé par une lamelle élastique 21 a susceptible de venir au contact d'un plot 21 b agencé sur la plaquette électronique 12 lorsque ladite lamelle élastique 21a est repoussée par l'élément de détection 30. Avantageusement, l'interrupteur de commande 14 est formé par une deuxième lamelle élastique 14a susceptible de venir au contact d'un deuxième plot 14b agencé sur la plaquette électronique 12 lorsque la deuxième lamelle élastique 14a est repoussée par l'élément de commande 18. Avantageusement encore, l'autre interrupteur de commande 16 est formé par une troisième lamelle élastique 16a susceptible de venir au contact d'un troisième plot 16b agencé sur la plaquette électronique 12 lorsque la troisième lamelle élastique 16a est repoussée par l'autre élément de commande 19.

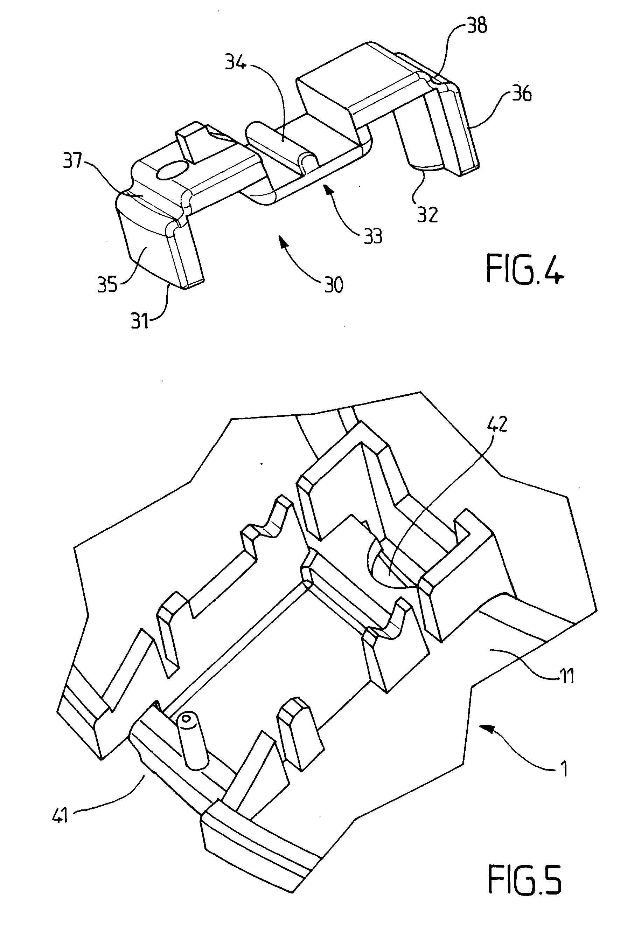

Tel que mieux visible sur la figure 4, l'élément de détection 30 comporte un corps central 33 présentant une zone de commande 34 prévue pour actionner l'interrupteur de sécurité 21. Le premier organe de détection 31 est formé sur un premier bras 35 articulé sur le corps central 33. Le deuxième organe de détection 32 est formé sur un deuxième bras 36 articulé sur le corps central 33.

Selon la forme de réalisation préférée illustrée sur la figure 4, le premier bras 35 et le deuxième bras 36 de l'élément de détection 30 sont formés en une seule pièce. A cet effet une première charnière élastique 37 est formée entre le premier bras 35 et le corps central 33, et une deuxième charnière élastique 38 est formée entre le deuxième bras 36 et le corps central 33.

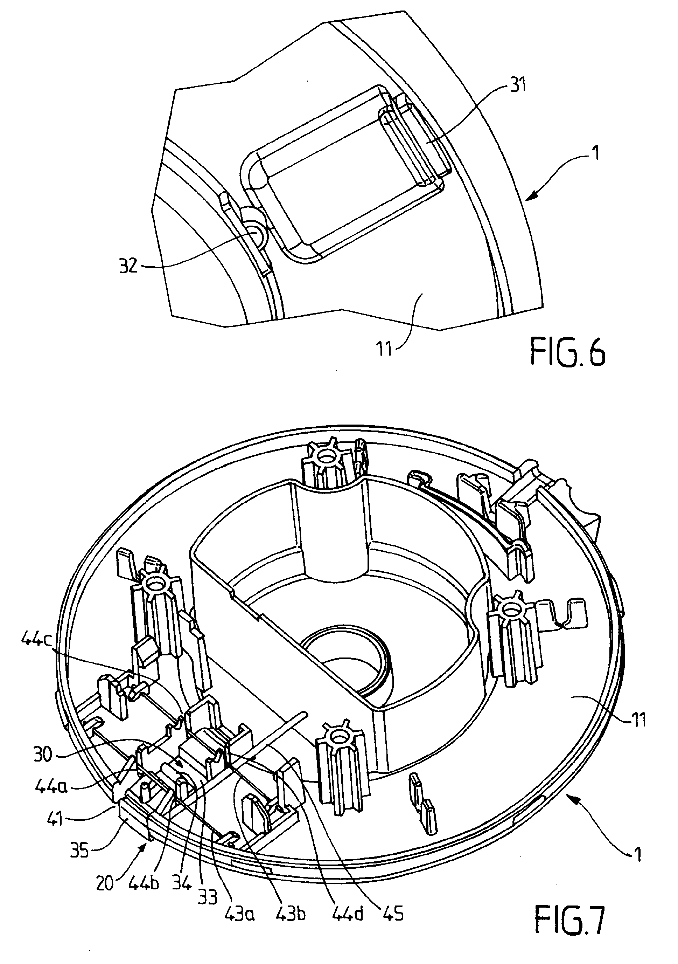

Le premier bras 35 est monté coulissant dans une première ouverture inférieure 41 du boîtier supérieur 1, visible sur les figures 5 et 7. Le deuxième bras 36 est monté coulissant dans une deuxième ouverture inférieure 42 du boîtier supérieur 1, visible sur la figure 5. Plus particulièrement, la première ouverture inférieure 41 est ménagée entre le capot inférieur 11 et le capot supérieur 10 ; la deuxième ouverture inférieure 42 traverse le capot inférieur 11.

L'élément de détection 30 est ainsi monté mobile selon une direction verticale dans le boîtier supérieur 1. Lorsque le boîtier supérieur 1 repose sur le récipient de travail 3 et que la coupelle 5 est agencée entre le récipient de travail 3 et le boîtier supérieur 1, le premier bras 35 est repoussé vers l'intérieur du boîtier supérieur 1 par le récipient de travail 3 et le deuxième bras 36 est repoussé vers l'intérieur du boîtier supérieur 1 par la coupelle 5.

Tel que montré sur la figure 7, l'élément de détection 30 est maintenu dans le boîtier supérieur 1 par des moyens de rappel élastiques 43, également visibles sur la figure 3. Avantageusement, les moyens de rappel élastiques 43 sont formés par deux tiges élastiques 43a, 43b montées dans le capot inférieur 11 et s'étendant transversalement au dessus du corps central 33, en étant agencées dans des guidages verticaux 44a, 44b, 44c, 44d.

Avantageusement, la lamelle élastique 21a de l'interrupteur de sécurité 21 peut également être associée à d'autres moyens de rappel élastiques 45. Tel que visible sur les figures 3 et 7, les autres moyens de rappel élastiques 45 sont formés par une traverse flexible montée dans le capot inférieur 11.

L'appareil selon l'invention s'utilise et fonctionne de la manière suivante.

En l'absence du récipient de travail 3 et de la coupelle 5, le premier organe de détection 31 et le deuxième organe de détection 32 occupent une position abaissée, tel qu'illustré sur les figures 6 et 9. L'interrupteur de sécurité 21 est en position ouverte. L'appareil ne peut fonctionner.

En présence de la coupelle 5, le deuxième organe de détection 32 est repoussé par la coupelle 5 et occupe une position relevée. Toutefois, en l'absence du récipient de travail 3, seul le deuxième organe de détection 32 occupe une position relevée, le premier organe de détection 31 restant en position abaissée, tel qu'illustré sur la figure 10. L'interrupteur de sécurité 21 reste en position ouverte. L'appareil ne peut fonctionner.

En présence du récipient de travail 3, le premier organe de détection 31 est repoussé par le récipient de travail 3 et occupe une position relevée. Toutefois, en l'absence de la coupelle 5, seul le premier organe de détection 31 occupe une position relevée, le deuxième organe de détection 32 restant en position abaissée, tel qu'illustré sur la figure 11. L'interrupteur de sécurité 21 reste en position ouverte. L'appareil ne peut fonctionner.

En présence du récipient de travail 3 et de la coupelle 5, c'est-à-dire lorsque la coupelle 5 est en place entre le boîtier supérieur 1 et le récipient de travail 3, le premier organe de détection 31 et le deuxième organe de détection 32 occupent une position relevée, tel qu'illustré sur la figure 12. Le soulèvement de l'élément de détection 30 ferme le circuit électrique formé entre la lamelle élastique 21 a et le plot 21 b. L'interrupteur de sécurité 21 est alors en position fermée. L'appareil peut fonctionner lorsque l'utilisateur actionne l'organe de commande 13 ou l'autre organe de commande 15.

La plaquette électronique 12 regroupe ainsi les fonctions de commande et de sécurité de l'appareil.

L'interrupteur de sécurité 21 monté sur la plaquette électronique 12 agencée dans le boîtier supérieur 1 permet de simplifier la réalisation de la partie électrique de l'appareil.

Le premier bras 35 et le deuxième bras 36 articulés sur le corps central 33 de l'élément de détection 30 permettent de simplifier la réalisation de la commande du dispositif de sécurité 20.

A titre de variante, l'élément de détection 30 comportant le premier bras 35 et le deuxième bras 36 articulés sur le corps central 33 n'est pas nécessairement réalisé en une seule pièce.

A titre de variante, l'élément de détection 30 comportant le premier bras 35 et le deuxième bras 36 articulés sur le corps central 33 pourrait être utilisé avec un interrupteur de sécurité n'appartenant pas nécessairement à une plaquette électronique.

A titre de variante, l'interrupteur de sécurité 21 monté sur la plaquette électronique 12 n'est pas nécessairement commandé par un élément de détection comportant un premier bras et un deuxième bras articulés sur un corps central.

La présente invention n'est nullement limitée à l'exemple de réalisation décrit et à ses variantes, mais englobe de nombreuses modifications dans le cadre des revendications.

## Revendications

1. Appareil électroménager de préparation culinaire, comportant un boîtier supérieur (1) logeant un moteur (2) associé à un dispositif de commande (9) et à un dispositif de sécurité (20), un récipient de travail (3) dans lequel est disposé un outil de travail rotatif (4) entraîné par le moteur (2), une coupelle (5) disposée entre le boîtier supérieur (1) et le récipient de travail (3), le dispositif de sécurité (20) comportant un élément de détection (30) prévu pour actionner un interrupteur de sécurité (21) autorisant le fonctionnement du moteur (2) lorsque la coupelle (5) est en place entre le boîtier supérieur (1) et le récipient de travail (3), l'élément de détection (30) comprenant un premier organe de détection (31) susceptible d'être repoussé par le récipient de travail (3) et un deuxième organe de détection (32) susceptible d'être repoussé par la coupelle (5), **caractérisé en ce que** l'interrupteur de sécurité (21) est monté sur une plaquette électronique (12) appartenant au dispositif de commande (9).

2. Appareil électroménager de préparation culinaire selon la revendication 1, **caractérisé en ce que** le boîtier supérieur (1) présente un organe de commande (13) prévu pour actionner un interrupteur de commande (14) monté sur la plaquette électronique (12).

3. Appareil électroménager de préparation culinaire selon la revendication 2, **caractérisé en ce que** l'interrupteur de sécurité (21) et l'interrupteur de commande (14) sont montés sur deux faces opposées de la plaquette électronique (12).

4. Appareil électroménager de préparation culinaire selon l'une des revendications 2 ou 3, **caractérisé en ce que** le boîtier supérieur (1) présente un autre organe de commande (15) prévu pour actionner un autre interrupteur de commande (16) monté sur la plaquette électronique (12).

5. Appareil électroménager de préparation culinaire selon la revendication 4, **caractérisé en ce que** l'autre interrupteur de commande (16) est agencé dans une branche de circuit électrique comportant une diode (17).

6. Appareil électroménager de préparation culinaire selon l'une des revendications 1 à 5, **caractérisé en ce que** l'élément de détection (30) comporte un corps central (33) présentant une zone de commande (34) prévue pour actionner l'interrupteur de sécurité (21), le premier organe de détection (31) étant formé sur un premier bras (35) articulé sur le corps central (33), le deuxième organe de détection (32) étant formé sur un deuxième bras (36) articulé sur le corps central (33).

7. Appareil électroménager de préparation culinaire selon la revendication 6, **caractérisé en ce que** le premier bras (35) est monté coulissant dans une première ouverture inférieure (41) du boîtier supérieur (1) et **en ce que** le deuxième bras (36) est monté coulissant dans une deuxième ouverture inférieure (42) du boîtier supérieur (1).

8. Appareil électroménager de préparation culinaire selon la revendication 7, **caractérisé en ce que** le premier bras (35) et le deuxième bras (36) de l'élément de détection (30) sont formés en une seule pièce.

9. Appareil électroménager de préparation culinaire selon l'une des revendications 7 ou 8, **caractérisé en ce que** l'élément de détection (30) est maintenu dans le boîtier supérieur (1) par des moyens de rappel élastiques (43).

10. Appareil électroménager de préparation culinaire selon l'une des revendications 1 à 9, **caractérisé en ce que** l'interrupteur de sécurité (21) est formé par une lamelle élastique (21 a) susceptible de venir au contact d'un plot (21 b) lorsque ladite lamelle élastique (21 a) est repoussée par l'élément de détection (30).

11. Appareil électroménager de préparation culinaire selon la revendication 10 et selon l'une des revendications 6 à 9, **caractérisé en ce que** la zone de commande (34) repousse la lamelle élastique (21 a) lorsque le premier organe de détection (31) est repoussé par le récipient de travail (3) et que le deuxième organe de détection (32) est repoussé par la coupelle (5).

## Patentansprüche

1. Elektrohaushaltsgerät für die Zubereitung von Speisen, umfassend ein oberes Gehäuse (1) mit einem Motor (2), der mit einer Betätigungsvorrichtung (9) und einer Sicherungsvorrichtung (20) verbunden ist, einen Arbeitsbehälter (3), in dem ein vom Motor (2) angetriebenes drehendes Arbeitswerkzeug (4) angeordnet ist, eine zwischen dem oberen Gehäuse (1) und dem Arbeitsbehälter (3) angeordnete Manschette (5), wobei die Sicherungsvorrichtung (20) ein Erkennungselement (30) zur Betätigung eines Sicherheitsschalters (21) umfasst, was den Betrieb des Motors (2) ermöglicht, wenn sich die Manschette (5) zwischen dem oberen Gehäuse (1) und dem Arbeitsbehälter (3) befindet, und wobei das Erkennungselement (30) aus einer ersten Erkennungsvorrichtung (31) besteht, die vom Arbeitsbehälter (3) verschoben werden kann, und einer zweiten Erkennungsvorrichtung (32), die von der Manschette (5) verschoben werden kann, **dadurch gekennzeichnet, dass** der Sicherheitsschalter (21) auf einer Leiterplatte (12), die Teil der Betätigungsvorrichtung (9) ist, angebracht ist.

2. Elektrohaushaltsgerät für die Zubereitung von Speisen nach Anspruch 1, **dadurch gekennzeichnet, dass** das obere Gehäuse (1) ein Betätigungsglied (13) zur Betätigung eines auf der Leiterplatte (12) angebrachten Betätigungsschalters (14) aufweist.

3. Elektrohaushaltsgerät für die Zubereitung von Speisen nach Anspruch 2, **dadurch gekennzeichnet, dass** der Sicherheitsschalter (21) und der Betätigungsschalter (14) auf zwei gegenüberliegenden Seiten der Leiterplatte (12) angebracht sind.

4. Elektrohaushaltsgerät für die Zubereitung von Speisen nach einem der Ansprüche 2 oder 3, **dadurch gekennzeichnet, dass** das obere Gehäuse (1) ein weiteres Betätigungsglied (15) zur Betätigung eines auf der Leiterplatte (12) angebrachten weiteren Betätigungsschalters (16) aufweist.

5. Elektrohaushaltsgerät für die Zubereitung von Speisen nach Anspruch 4, **dadurch gekennzeichnet, dass** sich der weitere Betätigungsschalter (16) an eine Stromkreisabzweigung mit einer Diode (17) anschließt.

6. Elektrohaushaltsgerät für die Zubereitung von Speisen nach einem der Ansprüche 1 bis 5, **dadurch gekennzeichnet, dass** das Erkennungselement (30) aus einem Hauptkörper (33) besteht, der eine Betätigungszone (34) zur Betätigung des Sicherheitsschalters (21) aufweist, dass die erste Erkennungsvorrichtung (31) aus einem ersten Arm (35), der mit dem Hauptkörper (33) verbunden ist, gebildet wird, dass die zweite Erkennungsvorrichtung (32) aus einem zweiten Arm (36), der mit dem Hauptkörper (33) verbunden ist, gebildet wird.

7. Elektrohaushaltsgerät für die Zubereitung von Speisen nach Anspruch 6, **dadurch gekennzeichnet, dass** der erste Arm (35) gleitend an einer ersten unteren Öffnung (41) des oberen Gehäuses (1) und der zweite Arm (36) gleitend an einer zweiten unteren Öffnung (42) des oberen Gehäuses (1) angebracht sind.

8. Elektrohaushaltsgerät für die Zubereitung von Speisen nach Anspruch 7, **dadurch gekennzeichnet, dass** der erste Arm (35) und der zweite Arm (36) des Erkennungselements (30) aus einem einzigen Stück gebildet sind.

9. Elektrohaushaltsgerät für die Zubereitung von Speisen nach einem der Ansprüche 7 oder 8, **dadurch gekennzeichnet, dass** das Erkennungselement (30) mithilfe von elastischen Rückstellmitteln (43) im oberen Gehäuse (1) gehalten wird.

10. Elektrohaushaltsgerät für die Zubereitung von Speisen nach einem der Ansprüche 1 bis 9, **dadurch gekennzeichnet, dass** der Sicherheitsschalter (21) aus einem Federblatt (21 a) gebildet wird, das mit einem Kontakt (21 b) in Berührung kommen kann, wenn das Federblatt (21 a) vom Erkennungselement (30) verschoben wird.

11. Elektrohaushaltsgerät für die Zubereitung von Speisen nach Anspruch 10 und nach einem der Ansprüche 6 bis 9, **dadurch gekennzeichnet, dass** die Betätigungszone (34) das Federblatt (21a) verschiebt, wenn die erste Erkennungsvorrichtung (31) vom Arbeitsbehälter (3) verschoben wird, und dass die zweite Erkennungsvorrichtung (32) von der Manschette (5) verschoben wird.

## Claims

1. Food preparation household electrical appliance comprising an upper box (1) housing a motor (2) associated with a control device (9) and a safety device (20), a working receptacle (3) in which is arranged a rotary working tool (4) driven by the motor (2), a cup (5) arranged between the upper box (1) and the working receptacle (3), the safety device (20) comprising a detection element (30) designed to actuate a safety switch (21) allowing the motor (2) to operate when the cup (5) is in place between the upper box (1) and the working receptacle (3), the detection element (30) comprising a first detection unit (31) that can be pushed back by the working receptacle (3) and a second detection unit (32) that can be pushed back by the cup (5), **characterised in that** the safety switch (21) is mounted on an electronic board (12) belonging to the control device (9).

2. Food preparation household electrical appliance according to claim 1, **characterised in that** the upper box (1) is equipped with a control unit (13) designed to actuate a control switch (14) mounted on the electronic board (12).

3. Food preparation household electrical appliance according to claim 2, **characterised in that** the safety switch (21) and the control switch (14) are mounted on two opposite sides of the electronic board (12).

4. Food preparation household electrical appliance according to claim 2 or 3, **characterised in that** the upper box (1) is equipped with another control unit (15) designed to actuate another control switch (16) mounted on the electronic board (12).

5. Food preparation household electrical appliance according to claim 4, **characterised in that** the other control switch (16) is arranged in an electrical circuit branch comprising a diode (17).

6. Food preparation household electrical appliance according to one of claims 1 to 5, **characterised in that** the detection element (30) comprises a central body (33) equipped with a control zone (34) designed to actuate the safety switch (21), the first detection unit (31) being formed on a first articulated arm (35) on the central body (33), the second detection unit (32) being formed on a second articulated arm (36) on the central body (33).

7. Food preparation household electrical appliance according to claim 6, **characterised in that** the first arm (35) is mounted so that it slides in a first lower opening (41) of the upper box (1) and **in that** the second arm (36) is mounted so that it slides in a second lower opening (42) of the upper box (1).

8. Food preparation household electrical appliance according to claim 7, **characterised in that** the first arm (35) and the second arm (36) of the detection element (30) are formed in a single piece.

9. Food preparation household electrical appliance according to claim 7 or 8, **characterised in that** the detection element (30) is held in the upper box (1) by spring return means (43).

10. Food preparation household electrical appliance according to one of claims 1 to 9, **characterised in that** the safety switch (21) consists of a spring blade (21 a) that can come into contact with a stud (21 b) when said spring blade (21 a) is pushed back by the detection element (30).

11. Food preparation household electrical appliance according to claim 10 and according to one of claims 6 to 9, **characterised in that** the control zone (34) pushes back the spring blade (21 a) when the first detection unit (31) is pushed back by the working receptacle (3) and that the second detection unit (32) is pushed back by the cup (5).
